# EUROPEAN PATENT SPECIFICATION

(11) **EP 3 089 613 B1**
(45) Date of publication and mention of the grant of the patent: **13.12.2023**
(21) Application number: 15733324.6
(22) Date of filing: 02.01.2015
(51) Int. Cl.: A45B 1/04, A45B 3/00, A61H 3/02, A45B 9/00

(54) **PORTABLE SECURING DEVICE**
TRAGBARE SICHERUNGSVORRICHTUNG
DISPOSITIF DE FIXATION PORTABLE

(30) Priority: 03.01.2014 SG 2014000459; 24.12.2014 SG 10201408676U
(43) Date of publication of application: 09.11.2016
(73) Proprietor: Loh, Yin Sze, Singapore 267858 (SG)
(72) Inventor: SENG, Ian Hao, Singapore 267858 (SG); SENG, Ing Le, Singapore 267858 (SG)
(74) Representative: Mewburn Ellis LLP
(86) International application number: PCT/SG2015/050002
(87) International publication number: WO 2015/102542

(56) References cited:
- AT-U2- 10 106
- CH-A- 168 901
- DE-U1-202009 017 717
- DE-U1-202013 003 248
- FR-A1- 2 713 451
- FR-A1- 2 916 325
- JP-A- H0 937 822
- US-A- 2 210 493
- US-A- 4 027 687
- US-A- 4 295 483
- US-A- 4 884 730
- US-A- 5 964 385
- TAN KAH KEE YOUNG: 'Award' XP008184129 Retrieved from the Internet: <URL:http://www.tkkfoundation.org.sg/tkk/da ta/awards/2014/J140669.pdf> [retrieved on 2015-03-24]

## Description

### FIELD OF INVENTION

The present disclosure relates to a portable securing device. In particular, the portable securing device is suitable, but not limited for the securement of mobility aids such as a cane, a crutch, a pole, a walking stick umbrella or other walking aids in a desired position.

### BACKGROUND TO THE INVENTION

The following discussion of the background to the disclosure is intended to facilitate an understanding of the present disclosure. However, it should be appreciated that the discussion is not an acknowledgment or admission that any of the material referred to was published, known or part of the common general knowledge in any jurisdiction as at the priority date of the application.

Mobility aids or walking aids are mostly used to assist walking or otherwise improve the mobility of individuals, in particular individuals with mobility impairment. Such mobility aids include canes, crutches, poles, walking stick umbrellas or other walking aids of the like. Such aids although required for mobility, can become unnecessary when the user is, for example, seated or reclined. The aid would typically be placed against a wall or leaned against other surface(s) such as the edge of a table that is in close proximity to the user so that the user can easily reach for the aid when required.

As the surface(s) are often not rough enough to hold the mobility or walking aids in position, mobility or walking aids when placed in such positions inadvertently slide off, slide away from the surface and/or fall to the ground. This poses a problem because individuals who require the help of such aids when walking typically do not have the ability to recover the aid by themselves when it is accidentally dropped to the ground and often require assistance from others. Furthermore, mobility or walking aid users such as the aged may also suffer from other health conditions such as arthritis that make the act of bending down a hazard, which may eventually result in a fall and associated injuries such as serious head injuries in an attempt to retrieve the aid that has fallen to the ground.

Mobility aids are also used by individuals with visual impairment. These mobility aids are typically in the form of a long white cane, to assist the visually impaired when walking. This cane when not held by such individuals must be stored properly as in any other walking aids as it would be very difficult and even dangerous for such individuals to retrieve or recover the cane should it slide off the surface of a wall or table and fall to the ground.

US Patent No. 6,311,942 discloses a bedside cane holder for holding upright a walking cane at the side of a bed that has a generally planar frame to be inserted between a mattress and a box spring of a bed. The bedside cane holder comprises a clamp on a side of the frame that attaches to one side of the bed and is for holding a walking cane hence providing a convenient holder for a person rising from the bed. However, such a holder is bulky, heavy and permanently attached to the bed. As such the holder is not easily removable and in that sense not 'portable'.

US Publication No. 2003/0234035 discloses a walking cane holder apparatus that allows a walking cane to be removably attached to a person's clothing when in use and also prevents the cane from falling to the ground. However, such a holder apparatus is for attachment to a person's clothing and is not suitable for secure attachment to other surfaces such as a wall, edge of a table, leg of a chair or any slanted surfaces.

US Patent No. 7,422,188 discloses a walking cane clamp which provides a positive clamping means by which the walking cane is held in a secure position and a pair of clamping straps for binding around the leg of a table or chair. However, the pair of clamping straps requires a certain degree of dexterity to operate in order to ensure that the device is securely attached to the leg of a table or chair. Individuals who are aged and have other health problems like arthritis or weakness of the hand would find it difficult to use the pair of clamping straps to secure the device and walking cane to the leg of a table or chair. This device is also not suitable for secure attachment to other types of surfaces such as a wall, the edge of a table or any slanted surfaces. Furthermore, the circumference of the clamping means for receiving the walking cane is fixed meaning that the clamping means is not suitable for securely holding other walking aids which have girths that are smaller or larger than the circumference of the clamping means.

AT10106 describes a mobile walking aid holder consisting of a glue lamp, a textile-coated rubber band and a metal ring. FR2916325 describes a walking assistance device comprising an integrated fastening system than can be attached to a support when the device is not in use. CH168901 describes a device comprising a pulling element for connecting an umbrella handle and a hat. DE202009017717 describes a holding device for walking aids comprising a cable or belt attachable at one end to a walking aid and connected at the other end to at least two different fastening means. DE202013003248 describes an anti-slip rubber sheath for a walking stick.

Other securing devices for mobility aids, when attached to a surface such as an edge of a table, may pose to be a hazard due to improper design resulting in the mobility aid causing obstruction to others.

Therefore, the present disclosure seeks to, inter alia, provide a portable securing device for releasably securing a mobility aid such as a cane, a crutch, a pole, a walking stick umbrella or other walking aids in a desired position that overcomes, or at least alleviates, the above-mentioned problems.

### SUMMARY OF THE INVENTION

It is therefore desirable to provide a mobility aid securing device for releasably securing a mobility aid such as a cane, a crutch a pole, a walking stick umbrella or other walking aids in a desired position. In particular, it is desirable to provide a securing device for a mobility aid that in use could be easily attached and detached relative to a surface by a user without excessive effort. This need for easy attachment/detachment is balanced by the need for proper securement to the surface such that the secured mobility aid is able to withstand certain amount of external force from displacing the mobility aid.

In accordance with an aspect of the present disclosure there comprises a portable securing device comprising an attachment means removably attachable to a portable object; a fastener releasably affixable to a plurality of surfaces, the fastener operable to be connected to the attachment means; wherein the fastener is movable relative to the attachment means in at least two planes. Such an arrangement is advantageous as the connection between the fastener and the attachment is similar to that of a joint that allows the mutual movement in at least two planes relative to one another.

Preferably, the distance between the fastener and attachment is adjustable. Preferably, the fastener is operable to be connected to the attachment means via a connector having a self-retracting portion operable to reduce distance between the attachment and fastener; the length of the self-retracting portion further capable of being adjusted in any direction.

The attachment means is in the form of an adjustable strap.

Preferably, in aspects not explicitly claimed, the adjustable strap is made of a hook and loop material.

The adjustable strap is an elastic strap.

Preferably, the elastic strap is made of antibacterial silicone rubber.

The fastener comprises a clamp to be affixed onto the plurality of surfaces and a non-slip gripping portion operable to contact the plurality of surfaces.

The non-slip gripping portion is rubber.

Preferably, the clamp comprises a biasing means operable to be biased towards bringing at least two ends of the clamp towards each other.

Preferably, the self-retracting connector comprises a cord.

Preferably, the cord is a stainless steel chain.

Preferably, the connector comprises a reflective portion.

Preferably, in aspects not explicitly claimed, the attachment and fastener are integrally moulded.

Preferably, the device further comprises a plurality of fasteners suited for affixing onto the plurality of surfaces.

Preferably, the plurality of fasteners includes clamps, clips and suction cups.

The portable object is a mobility aid.

The elastic strap comprises a means for holding an accessory.

The means for holding an accessory comprises a sleeve.

The accessory is a battery operated light source, a GPS locator, or a sound source.

Preferably, the at least two planes comprise vertical plane, horizontal plane, tangential plane and rotational plane.

In accordance with another aspect of the disclosure there is a mobility aid device having a portable means for securing to a surface, the means for securing comprising an attachment means for attachment to a portion of the mobility aid device; a fastener releasably affixable to a plurality of surfaces, the fastener operable to be connected to the attachment means; the fastener is movable relative to the attachment means in at least two planes; wherein in use the mobility aid is maintained in a desired position relative to the surface once the fastener is releasably affixed to the surface.

Preferably the mobility aid device comprises a self-retracting connector operable to reduce distance between the attachment and fastener in operation the mobility aid device is brought as close to the surface or the edge of the surface; the length of the self-retracting portion further capable of being adjusted in any direction.

Preferably the mobility aid device comprises a removable jacket covering an elongated portion of the mobility aid device. Preferably, the removable jacket comprises an anti-slip sheath.

In accordance with another aspect of the disclosure there comprises a kit for a portable securing device comprising a plurality of attachment means and fasteners of the portable securing device defined in the previous aspect of the disclosure.

In accordance with another aspect of the disclosure there comprises a kit for a portable securing device comprising a portable securing device defined in the previous aspect of the disclosure; and a removable jacket for covering an elongated portion of the mobility aid device.

In accordance with another aspect of the disclosure there comprises a kit comprising a portable securing device defined in the previous aspect of the disclosure; a mobility aid device and a removable jacket for covering an elongated portion of the mobility aid device.

In accordance with yet another aspect of the present disclosure, there is provided a mobility aid securing device comprising an attachment for removably attaching the device to a mobility aid, a connector and a fastener. The connector is for connecting the fastener to the attachment and hence to the mobility aid. The fastener is for releasably affixing to any kind of surface. When in use, the device is attached to a mobility aid and a user can simply affix the device to any desired surface by means of the fastener. In this way, the mobility aid can be secured in a desired position and as such prevented from falling to the ground due to the force of gravity.

Advantageously, the device functions to keep the mobility aid in an erect or upright position, or a substantially erect or substantially upright position, or even an inclined position, when in use, such as when the device is secured to a surface of any kind such as a wall, the edge of a table, a slanted surface or a curved surface. Furthermore, the device is advantageously portable, lightweight and compact.

Other aspects and features of the present disclosure will become apparent to those skilled in the art upon review of the following description of specific aspects of the disclosure in conjunction with the accompanying figures.

The invention is defined in the claims.

### BRIEF DESCRIPTION OF DRAWINGS

The present disclosure will now be described, by way of illustrative example only, with reference to the accompanying drawings, of which:
FIG. 1A is a side view of a mobility aid attachment of a mobility aid securing device for attaching the device to the mobility aid in accordance with an aspect of an aspect of the present disclosure;
FIG. 1B is a perspective view of the mobility aid attachment of FIG. 1A;
FIGS. 2A and 2B are front views of a connector of the mobility aid securing device of FIG. 1A;
FIG. 2C is a side view of the connector of FIG. 2A;
FIGS. 3A to 3C are front views of another aspect of the connector of FIGS. 2A to 2C;
FIG. 3D is a side view of the connector of FIG. 3A;
FIG. 4A is a top view of a fastener of the mobility aid securing device of FIG. 1A;
FIG. 4B is a side view of the fastener of FIG. 4A;
FIGS. 5A and 5B are perspective views of another aspect of the fastener of FIGS. 4A and 4B;
FIG. 6A is a perspective view of the fastener of FIGS. 4A and 4B being attached to the connector of FIGS. 2A to 2C;
FIG. 6B is a perspective view of the fastener of FIGS. 5A and 5B being attached to the connector of FIGS. 2A to 2C;
FIG. 6C is a perspective view of both the fastener of FIGS. 4A and 4B and the fastener of FIGS. 5A and 5B being attached to the connector of FIGS. 2A to 2C;
FIG. 7A is a perspective view of both the fastener of FIGS. 4A and 4B and the fastener of FIGS. 5A and 5B being attached to the connector of FIGS. 3A to 3D;
FIG. 8A is a perspective view of the mobility aid attachment of FIG. 1A and 1B being attached to a mobility aid;
FIG. 8B is a perspective view of the connector of FIGS. 2A to 2C being fastened onto the mobility aid attachment and mobility aid of FIG. 8A;
FIG. 9A is a perspective view of the mobility aid securing device of FIG. 1A when the device is being secured to a vertical flat surface;
FIG. 9B is a perspective view of another aspect of the mobility aid securing device of FIG. 9A;
FIG. 10A is a perspective view of another aspect of the mobility aid securing device of FIG. 9A when the device is being secured to an edge of a table;
FIG. 11 shows perspective views of the fastener of FIGS. 4A and 4B, which are freely rotatable 360 degrees along all planes;
FIG. 12A to FIG. 12D shows perspective views of the attachment means in accordance with another aspect of the disclosure;
FIG. 13A is a perspective view of a connector in the form of a self-retracting reel having one end attached to a fastener; FIG. 13B is a perspective view of the connector having an edge attached to the attachment means of FIG. 12A to 12D;
FIG. 13C shows an extended portion of the self-retracting reel of FIG. 13A;
FIG. 13D shows an assembled securing device having an attachment means of

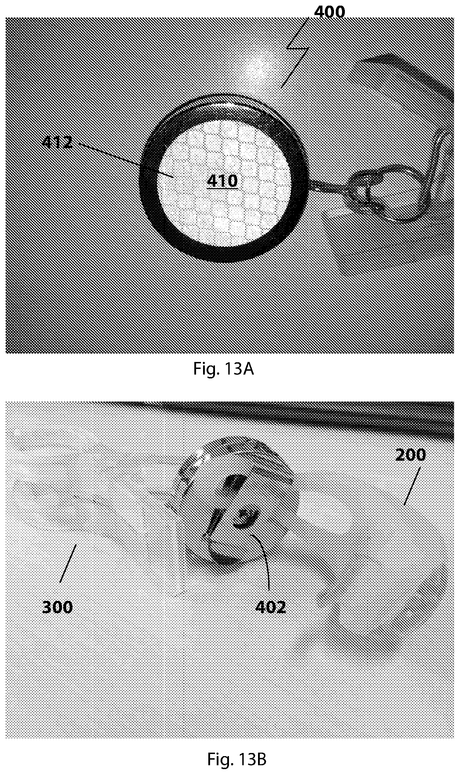

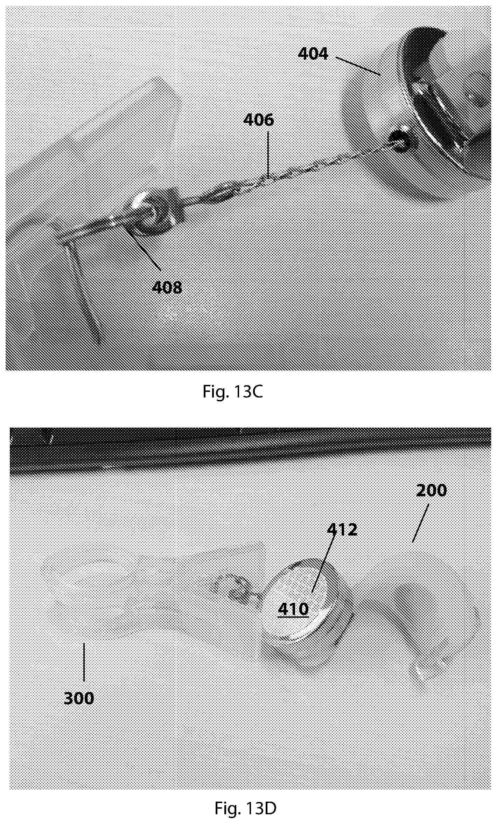

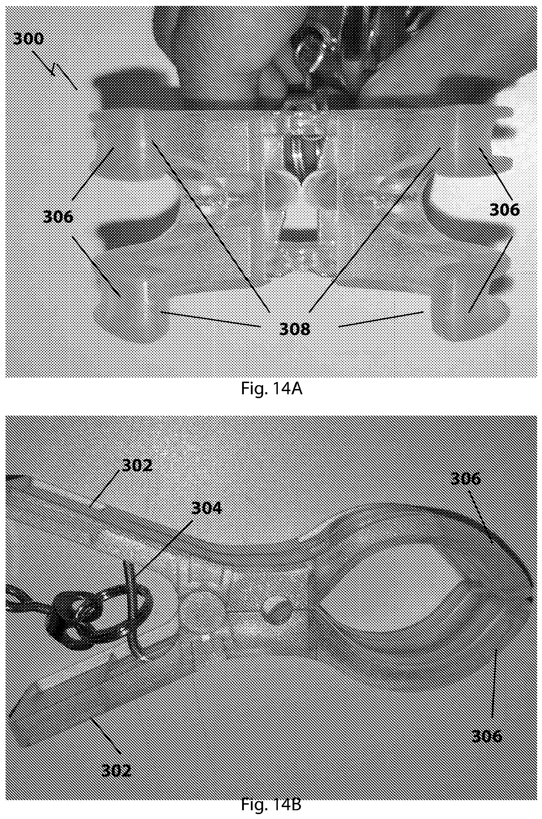

FIG. 13A, connector of FIG. 13B, and a fastener of FIG. 14A in accordance with another aspect of the disclosure;
FIG. 14A illustrates a fastener in the form of a clamp in an open position ready to be clamped onto a surface; FIG. 14B illustrates the same fastener in a closed position;

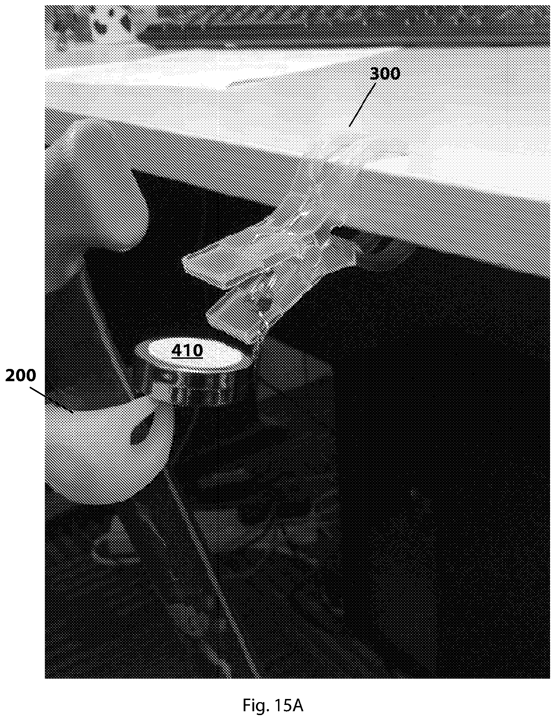

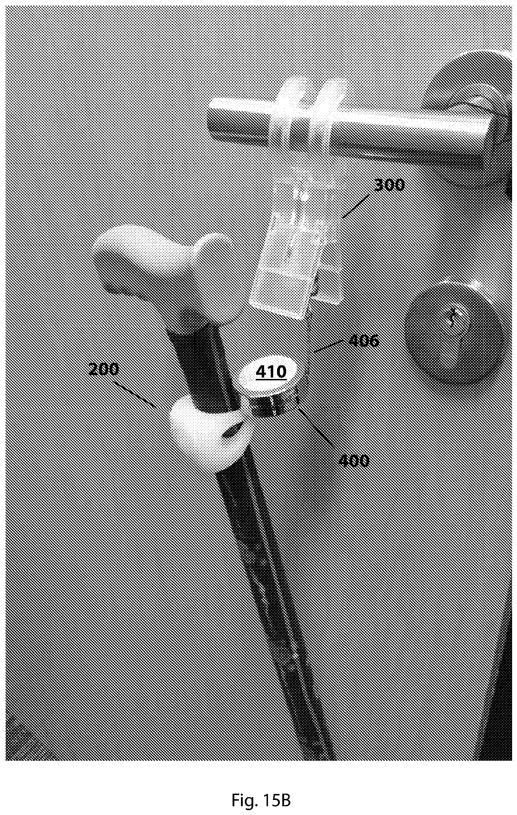

FIG. 15A illustrates a portable securing device being attached to a mobility aid at one end and affixed to an edge of a table on the other end; FIG. 15B illustrates the portable securing device of FIG. 15A affixed to a door handle.

Other arrangements of the disclosure are possible and, consequently, the accompanying drawings are not to be understood as superseding the generality of the preceding description of the disclosure.

### DETAILED DESCRIPTION

In accordance with an aspect of the disclosure there comprises a portable securing device 10 (used interchangeably with the term 'securing device' unless otherwise stated). The securing device 10 comprises an attachment 20; and a fastener 30 operably to be connected to the attachment 20 via, for example a connector 40. The fastener 30 is movable relative to the attachment means 20 in at least two planes. The term 'movable' includes rotational movement similar to a joint-like movement, such as a shoulder joint that enable movement in a large circle in two or more planes.

In an aspect, the securing device 10 is used to secure a mobility aid to a surface. Examples of mobility aids include a cane, a crutch, a pole, a walking stick umbrella or other walking aids. It is to be understood that mobility aids may also comprise hybrids of one or more of the above mentioned.

The attachment 20 of the securing device 10 is preferably sized and shaped for removable attachment to the mobility aid. The fastener 30 is for releasably affixing the mobility aid to at least a surface, but preferably a plurality of surfaces at different orientation and/or planes. Examples of the plurality of surfaces include an edge of a table, table top, door handle, grab poles in buses and/or train, benches, edge of beds, table legs, safety grab poles in bathrooms, etc. The connector 40 connects the attachment 20 and fastener 30 and is operable to assist to keep the mobility aid in a desired position after securing onto the surface to keep it from swinging or swaying. In this way, the securing device 10 is operable to keep the mobility aid in a desired position that may include erect or upright position, or a substantially erect or substantially upright position, or even an inclined position. Furthermore, the device is advantageously portable, lightweight and compact.

To fulfil the 'removably attachable' function, the attachment 20 for removably attaching the device 10 to a mobility aid is typically in the form of an adjustable strap. The adjustable strap 20 can be made of hook and loop material, Velcro^{™} or materials of the like. The adjustable strap 20 attaches the device 10 to a mobility aid by wrapping around a region of the mobility aid, such as the girth. The adjustable strap 20 is advantageous as it can accommodate various mobility aids with different girth size. As such, the device 10 can be attached to a mobility aid of any size.

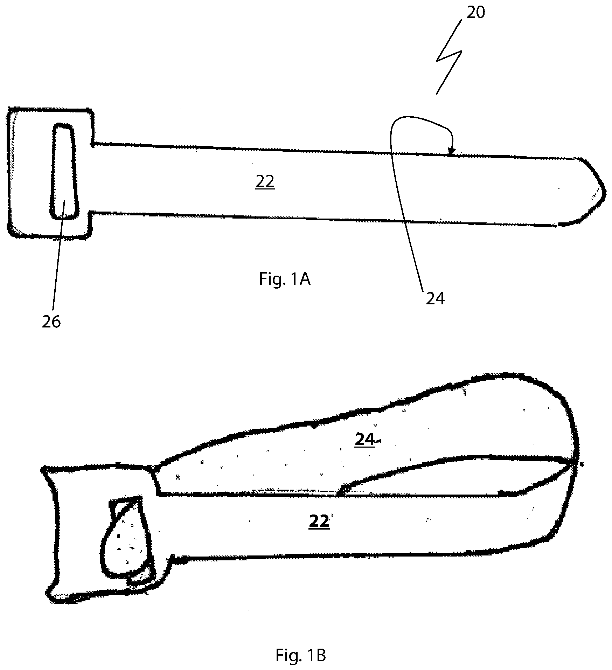

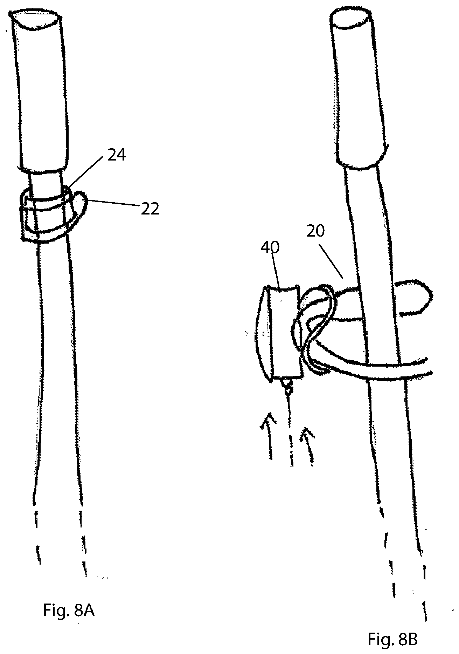

As shown in Figs. 1A and 1B, the adjustable strap 20 is made up of two surfaces 22 and 24 and an aperture 26. The surfaces 22 and 24 are mutually adhesive. In operation, a portion of the adjustable strap 20 passes through the aperture 26 forming a loop for receiving the desired region of the mobility aid (See Figs. 8A and 8B). The adjustable strap 20 and hence the device 10 is then securely attached to the mobility aid by means of the mutually adhesive surfaces 22 and 24.

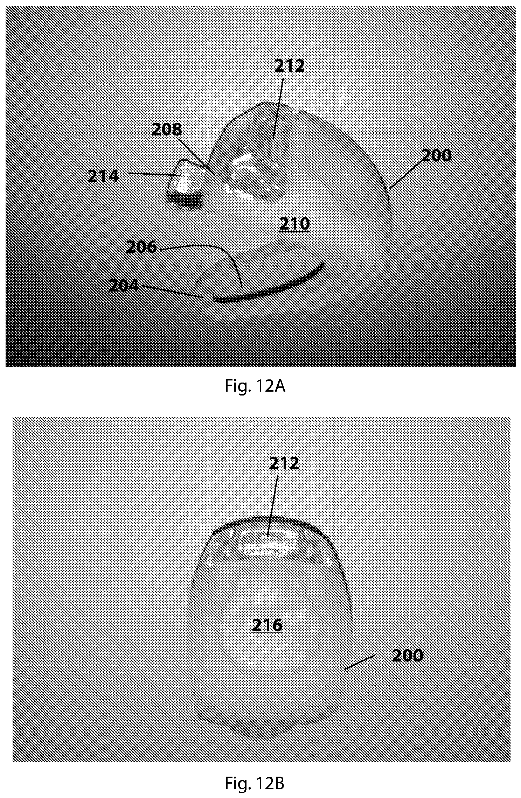

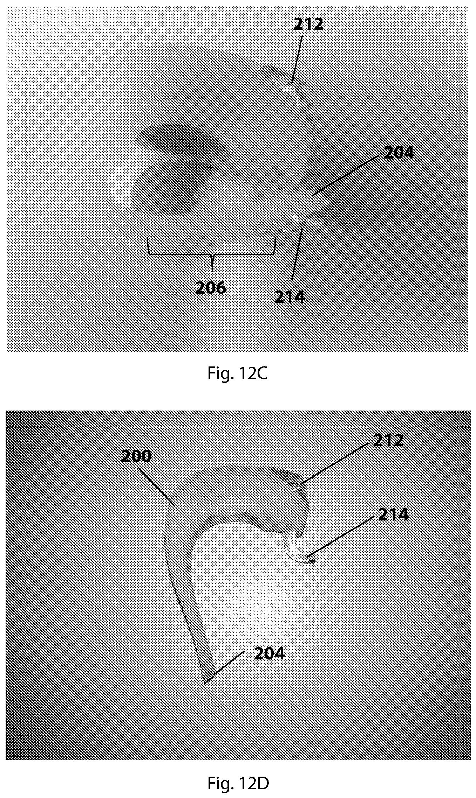

With reference to Figs. 12A to 12C, another aspect of the attachment 20 is in the form of an elastic strap 200 dimensioned to have an aperture 206 proximate one end 204 of the strap. The other end 208 of the elastic strap 200 preferably comprises a means for receiving an accessory 212. The means for receiving an accessory 212 may be in the form of a sleeve 210. There further comprises at end 208 a hook 214 shaped and sized for receiving a portion of the end 204. In this respect, the aperture 206 may be shaped and dimensioned to be hooked by hook 214 when attached. When in use, the elastic strap 200 may be wrapped around a portion/region of the mobility aid. The elastic strap 200 may then be stretched around the portion/region of the mobility aid and the aperture 206 hooked onto the hook 214. In this way the stretched elastic strap 200 is securely wrapped around the mobility aid. The elastic strap 200 is preferably made of antibacterial silicone rubber material because of at least the following reasons: -
a. The surface of the antibacterial silicone rubber material has anti-slip property which retains the elastic strap 200 in position once the elastic strap 200 is looped around the desired portion or region of the mobility aid; the anti-slip property further preventing the elastic strap 200 from slipping along the mobility aid.
b. The antibacterial property is ideal for a user of the mobility aid, usually aged individuals who are more susceptible to bacterial infection via skin contact.
c. Such antibacterial silicone rubber material is typically lightweight, durable, and generally inexpensive to purchase.

In an aspect, the accessory is a light source 212. The light source 212 may be a battery operated LED light source 212 that is similar to the type used in bicycles. Such LED light source 212 comprises an actuator in the form of a push button 216 that allows a user to easily actuate to switch on or off the LED light. The sleeve 210 may be used for holding other accessories such as a GPS device and/or an alarm, for example. One or more of such accessories 212 would be advantageous if the user of the mobility aid is lost (i.e. the GPS device would be useful for the user to be located and found), or in a situation requiring a call for help (via activating the alarm by a simple push of an actuator).

The connector 40 is for connecting the fastener 30 to the attachment 20 and hence to the mobility aid.

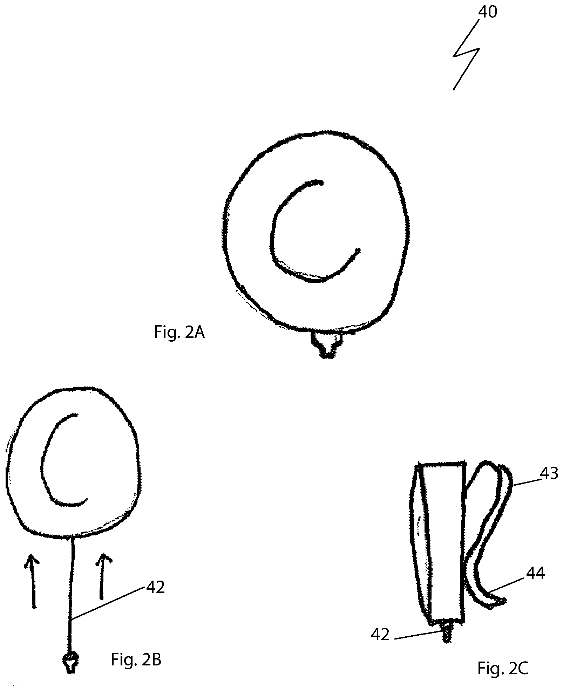

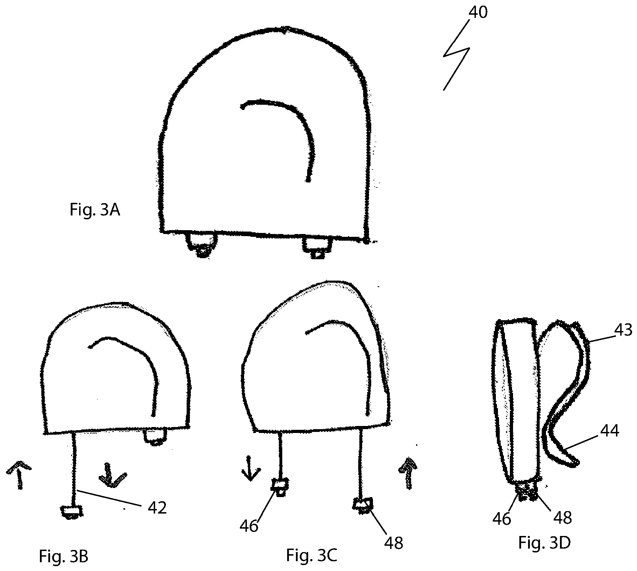

The connector 40 comprises a resilient portion 42 operable to minimize distance between the attachment 20 and fastener 30 when in use. The connector 40 is typically in the form of a self-retracting reel as shown in Figs. 2A to 2C. The self-retracting reel comprises coupling means 42, typically in a form of a hook 43, 44 for coupling the self-retracting reel to the adjustable strap 20. Figs. 3A-3D shows another aspect of a self-retracting reel 40 with a dual self-retracting mechanism denoted as reference numerals 46 and 48 in the figures.

With reference to Figs. 13A and 13B, another aspect of the connector 40 is in the form of a self-retracting reel 400. The self-retracting reel 400 comprises a coupling means 402 for coupling with a portion of the elastic strap 200 so as to achieve connectivity with the elastic strap 200. Self-retracting reel 400 may comprise a housing 404 for housing a stainless steel chain 406 biased towards being retracted into the housing. A free end 408 portion of the stainless steel chain extends from the self-retracting reel 400 for connectivity with the fastener 30. A surface 410 of the self-retracting reel 400 may be covered with reflective material 412. The self-retracting reel 400 preferably has a diameter of forty millimetres so that the reflective surface (covering an area) is visible at night, and the amount of stainless steel chain held within the reel 400 is of an optimal length.

In another aspectaspect, the connector 40 can be in the form of a ring (not shown). The attachment such as the adjustable strap 20 can be coupled to the ring via the hole defined by the ring. The fastener 30 can also be attached to the ring via the hole defined by the ring. In this way, the ring connects the fastener 30 to the attachment and hence to the mobility aid.

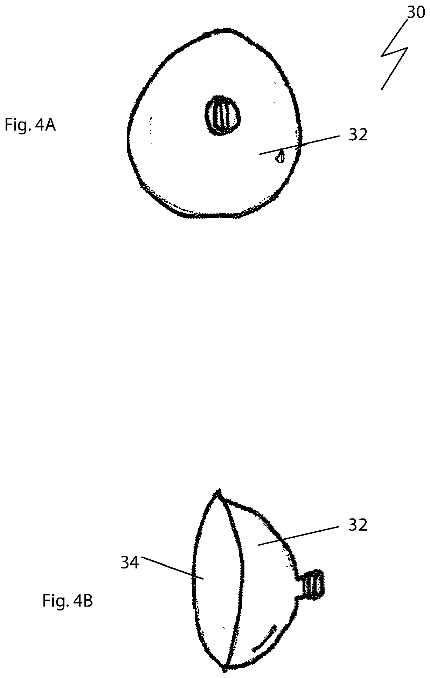

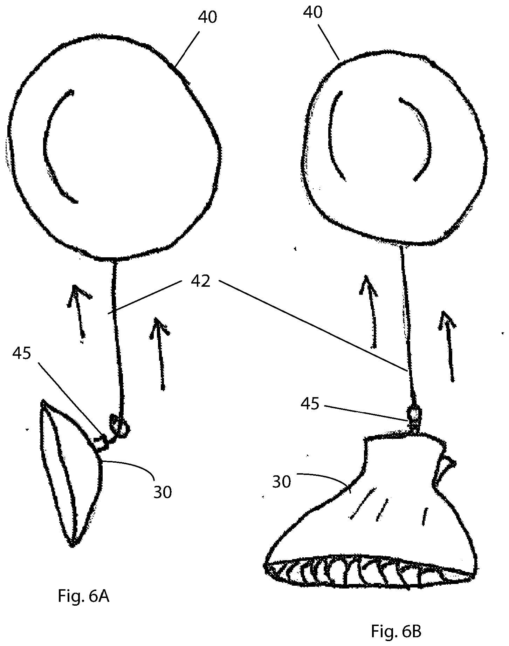

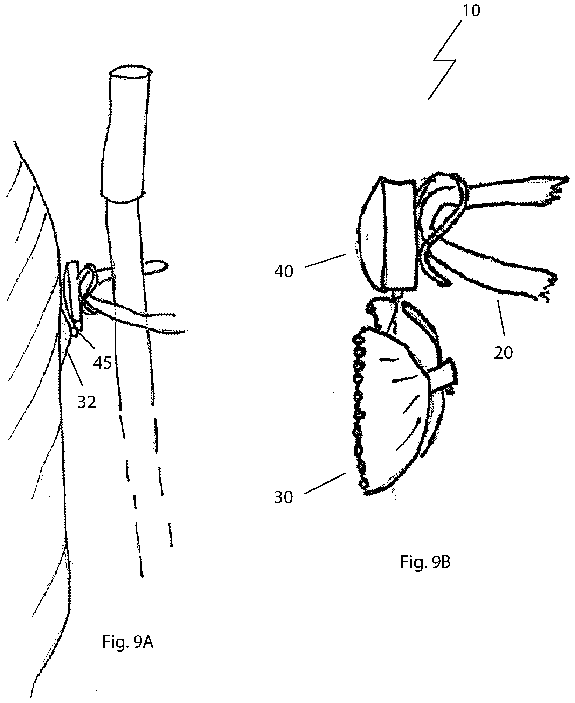

The fastener 30 is for releasably affixing to at least one type of surface. In particular, the surface may be a relatively smooth non-porous surface. In this case (not explicitly claimed) the fastener 30 can be in a form of a suction cup. As shown in Figs. 4A, 4B, 9A and 11, the suction cup has a convex surface 32 and a concave surface 34, the concave surface 34 for affixing on to a relatively smooth surface such as the surface of a wall, table, bed frame or the like and even slanted or curved surfaces. The suction cup is attached to the free end 45 of the self-retracting reel 40 as shown in Figs. 6A and 9A. Advantageously, the suction cup comprises an ear or protrusion for easy release of the suction cup from any surface that it has affixed to by a simple action of pulling the ear or protrusion in a direction away from the surface.

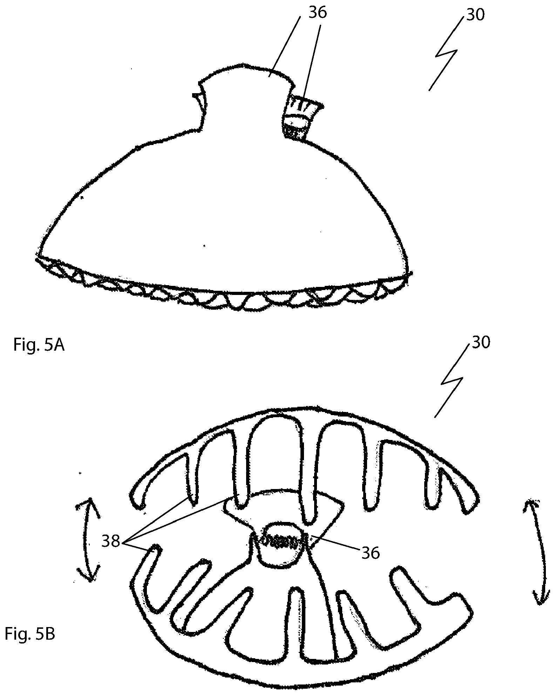

As shown in Figs. 5A and 5B, for a porous or rough surface where a suction cup cannot be secured thereon, the fastener 30 may be in the form of a clamp which can be attached to the connector 40. As shown in Fig.6B, the clamp 30 is being attached to the free end of the self-retracting reel. The clamp comprises self-gripping jaws 38 and/or non-slip teeth that grasp onto any planar surfaces or pole or pillar-like forms so as to secure the device and hence the mobility aid to a desired position. The clamp comprises biasing means, such as a spring, such that the jaws 38 of the clamp are continually being urged towards each other thereby enabling the jaws to be self-gripping. The clamp 30 also comprises handles 36 or ears for conveniently bringing the jaws apart when a force is applied to the handles or ears 32 so that a portion of any planar surface or segment of a pole or pillar-like forms can be received between the jaws. It would be appreciated that the clamp can have any number of teeth so long as the clamp is able to grasp onto any planar surfaces or pole or pillar-like forms so as to secure the device and hence the mobility aid to a desired position.

In another aspect as shown in Figs. 14A to 14C, the fastener 30 is preferably a clamp 300 having a pair of jaws 306 and two handles or ears 302 for actuating the clamp 300. The clamp 300 comprises biasing means 304, such as a spring, arranged such that the jaws 306 of the clamp are continually being urged towards each other thereby enabling the jaws to be self-gripping. The biasing strength of the jaws 306 should preferably not be too strong such that a user who is relatively weak in terms of dexterity may operate the clamp by moving the handles 302 towards each other. However, as having a relatively weaker biasing strength may compromise of the grip strength when gripping onto the surface, friction enhancing materials such as rubber strips (or non-slip material) 308 may be attached to the jaws 306 to enhance the grip strength so as to withstand a certain level of unforeseen external force pushing or knocking onto the mobility aid when it is secured to a surface. Alternatively, the jaws 306 or portion of the jaws contacting the surface may be made of non-slip material such as silicon.

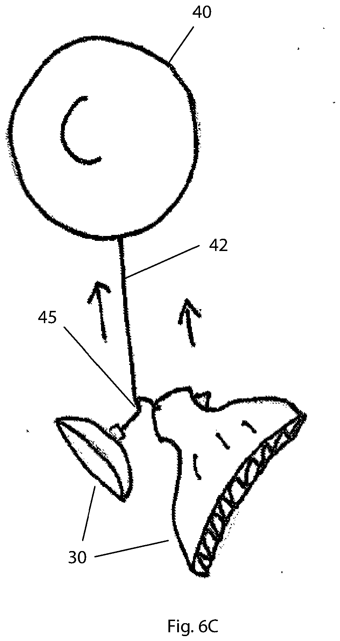

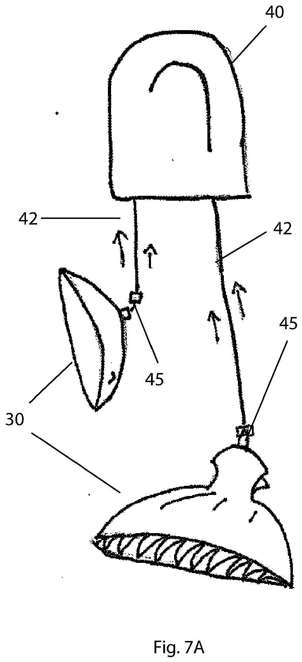

It would also be appreciated that more than one fastener 30 can be attached to the connector 40. As shown in Figs. 6C and 7A, two fasteners, the suction cup and the clamp, are attached to the self-retracting reel. This is advantageous because such a configuration would enable the device to be secured onto a plurality of surfaces and increases the versatility of the fastener.

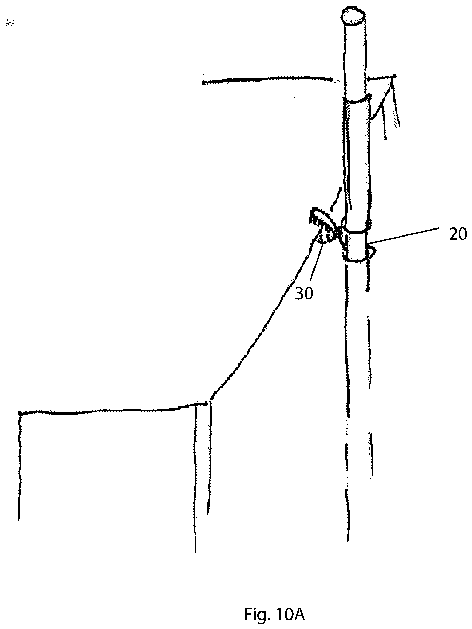

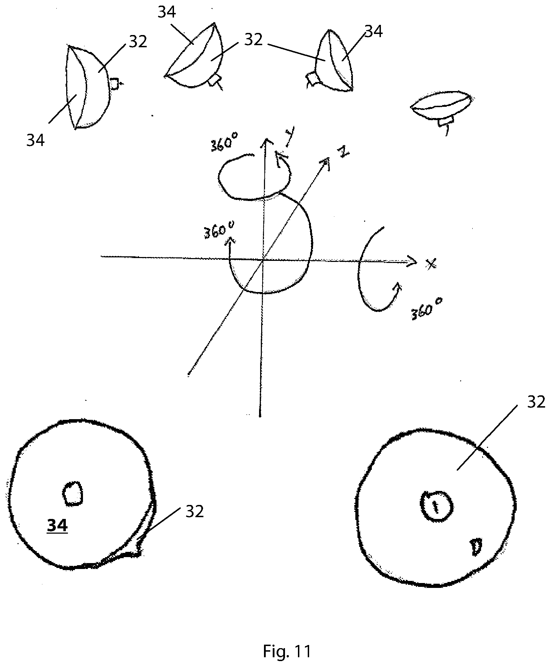

Figs. 6A to 6C, 7A, 9A, 9B and 10A show the self-retracting reel 40, 400 approximating itself as close as possible to the suction cup and/or clamp. The self-retracting reel exerts a traction force that keeps the mobility aid as close in proximity to the surface the device is being affixed to as possible. The self-retracting reel enables the fastener(s) to be rotatable three hundred and sixty (360) degrees on all planes (see Fig. 11) and therefore has a completely flexible range of motion in various planes and directions, including vertical planes, horizontal planes, tangential planes and rotational planes.

To use the device, after the device is attached to a mobility aid, a user can simply affix the device to any desired surface by means of the suction cup and/or the clamp. After the device has been affixed onto the desired surface, the continual traction force exerted by the self-retracting reel exerts a traction force keep the mobility aid as close in proximity to the desired surface as possible, coupled with the suction force of the suction cup and/or the non-slip self-biting jaw grip of the clamp that fixate the device to the desired surface that the mobility aid can securely lean on or be fixated against for support when not held, and as such prevent the mobility aid from falling to the ground due to the force of gravity. Advantageously, other features such as a braille label indicating a user's name can be attached to the handles of the jaws of the clamp that grip supporting surfaces. This is to advantageously allow the user to be able to identify their personal mobility aid with ease, especially if the mobility aid is standing among other mobility aids not belonging to the user.

In another aspect, there comprises a kit comprising a plurality of attachment parts 20, 200; a plurality of fasteners parts 30, 300; and a plurality of connector parts 40, 400; wherein a user may choose from the attachment parts, fastener parts 30, 300 and connector parts 40, 400 to form a suitable portable securing device suitable for use to secure a specific portable object, such as a mobility aid to a plurality of different surfaces at different orientation or planes. Non-exhaustive examples of the plurality of surfaces include those previously described and may further include a wall, the edge of a table, a slanted surface or a curved surface. The plurality of parts 20, 200, 30, 300, 40, 400 enables a user to 'mix and match' in accordance with their preference to configure a portable securing device based on his/her needs.

In another aspect, there is a kit comprising a portable securing device, a mobility aid device and in addition, a removable jacket for covering a portion of the mobility aid device, typically the elongated portion, for some form of protection. The removable jacket may be in the form of an anti-slip sheath such as rubber tubing. The scope of the invention is only defined by the claims.

Although the foregoing disclosure has been described in some detail by way of illustration and example, and with regard to one or more aspects, for the purposes of clarity of understanding, it is readily apparent to those of ordinary skill in the art in light of the teachings of this disclosure that certain changes, variations and modifications may be made thereto. In particular: -
- The attachment 20 and fastener 30 may be integrally moulded with the connection between the attachment 20 and fastener 30 being an extension of either the attachment 20 or the fastener 30, as long as the connection to each other enables flexibility of movement of the fastener 30 relative to the attachment 20 so as to facilitate attachments to a surface at different orientation and plurality of planes.
- The features and aspects relating to kit(s) may be combined to provide greater variety of choices and options to a consumer.
- Although it was described in at least one aspect that the distance between the fastener and attachment is minimized, it is to be appreciated that the distance between the fastener and attachment may be adjustable.

It would be further appreciated that although the disclosure covers individual aspects, it also includes combinations of the aspects discussed. For example, the features described in one aspect is not being mutually exclusive to a feature described in another aspect, and may be combined to form yet further aspects of the disclosure. As an example, a plurality of fasteners 30 and 300 may be combined and joined to a common connector 40, 400 for connecting to a plurality of attachments 20,200 to improve versatility and robustness of the portable securing device.

## Claims

1. A portable securing device (10) comprising:
an attachment means (20) in the form of an adjustable strap, removably attachable to a mobility aid, wherein the adjustable strap is an elastic strap comprising a means for holding an accessory (212); and
a fastener (30) including a clamp to be releasably affixable to a plurality of surfaces, the clamp comprising
a rubber non-slip gripping portion operable to contact the plurality of surfaces, the fastener (30) operable to be connected to the attachment means (20); wherein the fastener (30) is movable relative to the attachment means (20) in at least two planes,
wherein the means for holding an accessory (212) comprises a sleeve (210) with the accessory, wherein
the accessory is selected from the group consisting of a battery operated light source, a GPS locator, and an alarm or a sound source.

2. The portable securing device (10) of claim 1, wherein the distance between the fastener (30) and attachment (20) is adjustable, optionally the fastener (30) is operable to be connected to the attachment means (20) via a connector (40) having a self-retracting portion (400) operable to reduce distance between the attachment and fastener; the length of the self-retracting portion (400) further capable of being adjusted in any direction.

3. The portable securing device (10) of claim 1, wherein the elastic strap is made of antibacterial silicone rubber, optionally wherein the clamp (300) comprises a biasing means (304) operable to be biased towards bringing at least two ends of the clamp towards each other.

4. The portable securing device (10) of claim 2, wherein the self-retracting portion (400) of the connector (40) comprises a cord, wherein preferably the cord is a stainless steel chain, optionally wherein the connector comprises a reflective portion.

5. The portable securing device (10) of claim 1, wherein the device further comprises a plurality of fasteners (30) suited for affixing onto the plurality of surfaces, and wherein preferably the plurality of fasteners (30) includes clamps, clips and suction cups.

6. The portable securing device (10) of any one of the preceding claims, wherein the mobility aid includes to a cane, a crutch, a pole, a walking stick umbrella or other walking aids.

7. The portable securing device (10) according to claim 1, wherein the at least two planes comprise vertical plane, horizontal plane, tangential plane and rotational plane.

8. A mobility aid device having a portable means for securing to a surface, the means for securing comprising the portable securing device of any one of claims 1 to 7.

9. A mobility aid device according to claim 8 comprising a connector (40) having a self-retracting portion (400) operable to reduce distance between the attachment (20) and fastener (30) in operation the mobility aid device is brought as close to the surface or the edge of the surface; the length of the self-retracting portion (400) further capable of being adjusted in any direction.

10. The mobility aid device of claim 8 or ,9 the mobility aid device comprising a removable jacket covering an elongated portion of the mobility aid device.

11. The mobility aid device of claim 10, wherein the removable jacket comprises an anti-slip sheath.

12. A kit for a portable securing device (10) comprising a plurality of attachment means (20) and fasteners (30) in accordance with any one of claims 1 to 7.

13. A kit according to claim 12 further comprising a removable jacket for covering an elongated portion of a mobility aid device.

14. A kit according to claim 13 further comprising a mobility aid device.

## Patentansprüche

1. Tragbare Sicherheitsvorrichtung (10), umfassend:
ein Befestigungsmittel (20) in Form eines verstellbaren Bandes, das abnehmbar an einer Mobilitätshilfe befestigt ist, wobei das verstellbare Band ein elastisches Band ist, das ein Mittel zum Halten eines Hilfsgeräts (212) umfasst; und
ein Anbringungselement (30), das eine Klemme umfasst, die lösbar an einer Vielzahl von Oberflächen befestigbar ist, wobei die Klemme einen rutschfesten Gummigriffteil umfasst, der einsetzbar ist, um die Vielzahl von Oberflächen zu berühren, wobei das Anbringungselement (30) einsetzbar ist, um mit dem Befestigungsmittel (20) verbunden zu werden; wobei das Anbringungselement (30) relativ zum Befestigungsmittel (20) in zumindest zwei Ebenen bewegbar ist, wobei das Mittel zum Halten eines Hilfsgeräts (212) eine Hülse (210) mit dem Hilfsgerät umfasst, wobei das Hilfsgerät aus der aus einer batteriebetriebenen Lichtquelle, einem GPS-Ortungsgerät und einer Schallquelle bestehenden Gruppe ausgewählt ist.

2. Tragbare Sicherheitsvorrichtung (10) nach Anspruch 1, wobei der Abstand zwischen dem Anbringungselement (30) und der Befestigung (20) einstellbar ist, wobei das Anbringungselement (30) gegebenenfalls einsetzbar ist, um mit dem Befestigungsmittel (20) über ein Verbindungsteil (40) mit einem selbsteinziehenden Abschnitt (400) verbunden zu werden, der einsetzbar ist, um den Abstand zwischen der Befestigung und dem Anbringungselement zu verringern; wobei die Länge des selbsteinziehenden Abschnitts (400) außerdem in jede beliebige Richtung einstellbar ist.

3. Tragbare Sicherheitsvorrichtung (10) nach Anspruch 1, wobei das elastische Band aus antibakteriellem Silikonkautschuk besteht, wobei die Klemme (300) gegebenenfalls ein Vorspannmittel (304) umfasst, das einsetzbar ist, um so vorgespannt zu werden, dass es zumindest zwei Enden der Klemme zueinander bringt.

4. Tragbare Sicherheitsvorrichtung (10) nach Anspruch 2, wobei der selbsteinziehende Abschnitt (400) des Verbindungsteils (40) einen Strang umfasst, wobei der Strang vorzugsweise eine Edelstahlkette ist, wobei das Verbindungsteil gegebenenfalls einen reflektierenden Abschnitt umfasst.

5. Tragbare Sicherheitsvorrichtung (10) nach Anspruch 1, wobei die Vorrichtung weiters eine Vielzahl von Anbringungselementen (30) umfasst, die zum Anbringen an der Vielzahl von Oberflächen geeignet sind, und wobei die Vielzahl von Anbringungselementen (30) vorzugsweise Klemmen, Klammern und Saugkappen umfasst.

6. Tragbare Sicherheitsvorrichtung (10) nach einem der vorangegangenen Ansprüche, wobei die Mobilitätshilfe einen Stock, eine Krücke, einen Stab, einen Gehstock, einen Regenschirm oder andere Gehhilfen umfasst.

7. Tragbare Sicherheitsvorrichtung (10) nach Anspruch 1, wobei die zumindest zwei Ebenen eine vertikale Ebene, eine horizontale Ebene, eine Tangentialebene und eine Rotationsebene umfassen.

8. Mobilitätshilfsvorrichtung mit einem tragbaren Mittel zum Befestigen an einer Oberfläche, wobei das Mittel zum Befestigen eine tragbare Sicherheitsvorrichtung nach einem der Ansprüche 1 bis 7 umfasst.

9. Mobilitätshilfsvorrichtung nach Anspruch 8, die ein Verbindungsteil (40) mit einem selbsteinziehenden Abschnitt (400) umfasst, der einsetzbar ist, um den Abstand zwischen der Befestigung (20) und dem Anbringungselement (30) zu verringern, wobei die Mobilitätshilfsvorrichtung während des Einsatzes nahe zur Oberfläche oder Kante der Oberfläche gebracht wird; wobei die Länge des selbsteinziehenden Abschnitts (400) außerdem in jede beliebige Richtung einstellbar ist.

10. Mobilitätshilfsvorrichtung nach Anspruch 8 oder 9, wobei die Mobilitätshilfsvorrichtung einen abnehmbaren Überzug umfasst, der einen länglichen Abschnitt der Mobilitätshilfsvorrichtung bedeckt.

11. Mobilitätshilfsvorrichtung nach Anspruch 10, wobei der abnehmbare Überzug eine Antirutschummantelung umfasst.

12. Kit für eine tragbare Sicherheitsvorrichtung (10), das eine Vielzahl von Befestigungsmitteln (20) und Anbringungselementen (30) nach einem der Ansprüche 1 bis 7 umfasst.

13. Kit nach Anspruch 12, das weiters einen abnehmbaren Überzug zum Bedecken eines länglichen Abschnitts eines Mobilitätshilfsvorrichtung umfasst.

14. Kit nach Anspruch 13, das weiters eine Mobilitätshilfsvorrichtung umfasst.

## Revendications

1. Dispositif de fixation portable (10), comprenant :
des moyens d'attache (20) sous la forme d'une sangle réglable, pouvant être fixée de manière amovible à une aide à la mobilité, dans lequel la sangle réglable est une sangle élastique comprenant des moyens pour maintenir un accessoire (212) ; et
une fixation (30) incluant une pince destinée à pouvoir être fixée de manière amovible sur une pluralité de surfaces, la pince comprenant une partie de préhension antidérapante en caoutchouc opérationnelle pour être mise en contact avec la pluralité de surfaces, la fixation (30) étant opérationnelle pour être reliée aux moyens d'attache (20) ; dans lequel la fixation (30) est mobile par rapport aux moyens d'attache (20) dans au moins deux plans,
dans lequel les moyens pour maintenir un accessoire (212) comprennent un manchon (210) avec l'accessoire, dans lequel l'accessoire est choisi dans le groupe constitué d'une source de lumière alimentée par batterie, d'un localisateur GPS et d'une alarme ou d'une source de son.

2. Dispositif de fixation portable (10) selon la revendication 1, dans lequel la distance entre la fixation (30) et les moyens d'attache (20) est réglable, facultativement la fixation (30) est opérationnelle pour être reliée aux moyens d'attache (20) via un connecteur (40) présentant une partie auto-rétractable (400) opérationnelle pour réduire la distance entre le dispositif d'attache et la fixation ; la longueur de la partie auto-rétractable (400) pouvant en outre être réglée dans n'importe quelle direction.

3. Dispositif de fixation portable (10) selon la revendication 1, dans lequel la sangle élastique est faite de caoutchouc de silicone antibactérien, facultativement dans lequel la pince (300) comprend des moyens de sollicitation (304) opérationnels pour être sollicités pour amener au moins deux extrémités de la pince l'une vers l'autre.

4. Dispositif de fixation portable (10) selon la revendication 2, dans lequel la partie auto-rétractable (400) du connecteur (40) comprend un cordon, dans lequel de préférence le cordon est une chaîne en acier inoxydable, facultativement dans lequel le connecteur comprend une partie réfléchissante.

5. Dispositif de fixation portable (10) selon la revendication 1, dans lequel le dispositif comprend en outre une pluralité de dispositifs de fixations (30) adaptées pour être fixées sur la pluralité de surfaces, et dans lequel de préférence la pluralité de fixations (30) inclut des pinces, des dispositifs de serrage et des ventouses.

6. Dispositif de fixation portable (10) selon l'une quelconque des revendications précédentes, dans lequel l'aide à la mobilité inclut une canne, une béquille, une perche, une canne de parapluie ou d'autres aides à la marche.

7. Dispositif de fixation portable (10) selon la revendication 1, dans lequel les au moins deux plans comprennent un plan vertical, un plan horizontal, un plan tangentiel et un plan de rotation.

8. Dispositif d'aide à la mobilité présentant des moyens portables de fixation à une surface, les moyens de fixation comprenant le dispositif de fixation portable selon l'une quelconque des revendications 1 à 7.

9. Dispositif d'aide à la mobilité selon la revendication 8, comprenant un connecteur (40) présentant une partie auto-rétractable (400) opérationnelle pour réduire la distance entre les moyens d'attache (20) et la fixation (30) en fonctionnement, le dispositif d'aide à la mobilité est amené aussi près que possible de la surface ou du bord de la surface ; la longueur de la partie auto-rétractable (400) pouvant en outre être réglée dans n'importe quelle direction.

10. Dispositif d'aide à la mobilité selon la revendication 8 ou 9, le dispositif d'aide à la mobilité comprenant une gaine amovible recouvrant une partie allongée du dispositif d'aide à la mobilité.

11. Dispositif d'aide à la mobilité selon la revendication 10, dans lequel la gaine amovible comprend une gaine antidérapante.

12. Kit pour un dispositif de fixation portable (10) comprenant une pluralité de moyens d'attache (20) et de fixations (30) selon l'une quelconque des revendications 1 à 7 .

13. Kit selon la revendication 12, comprenant en outre une enveloppe amovible pour couvrir une partie allongée d'un dispositif d'aide à la mobilité.

14. Kit selon la revendication 13, comprenant en outre un dispositif d'aide à la mobilité.
